# FASCICULE DE BREVET EUROPEEN

(11) **EP 2 926 144 B1**
(45) Date de publication et mention de la délivrance du brevet: **23.08.2017**
(21) Numéro de dépôt: 13807950.4
(22) Date de dépôt: 29.11.2013
(51) Int. Cl.: G01N 35/00

(54) **MODULE D'ATTRACTION MAGNETIQUE, ROBOT COMPRENANT UN TEL MODULE, ET PROCEDE D'UTILISATION SUR BILLES MAGNETIQUES D'UN TEL MODULE OU D'UN TEL ROBOT**
MAGNETANZIEHUNGSMODUL, ROBOTER MIT SOLCH EINEM MODUL UND VERFAHREN ZUR VERWENDUNG SOLCH EINES MODULS ODER SOLCH EINES ROBOTERS MIT MAGNETISCHEN KÜGELCHEN
MAGNETIC ATTRACTION MODULE, ROBOT INCLUDING SUCH A MODULE, AND METHOD FOR USING SUCH A MODULE OR SUCH A ROBOT ON MAGNETIC BEADS

(30) Priorité: 30.11.2012 FR 1261497
(43) Date de publication de la demande: 07.10.2015
(73) Titulaire: Primadiag S.A.S, 93230 Romainville (FR)
(72) Inventeur: MEUNIER, Gregory, F-75013 Paris (FR); LEFRANCOIS, Benjamin, F-91300 Massy (FR)
(74) Mandataire: Pontet Allano & Associes
(86) Numéro de dépôt international: PCT/EP2013/075111
(87) Numéro de publication internationale: WO 2014/083165

(56) Documents cités:
- US-A- 5 443 791
- US-A- 6 124 139
- US-A1- 2002 014 443
- US-A1- 2003 127 396
- US-A1- 2005 047 963
- US-A1- 2007 214 900
- US-A1- 2010 200 405
- US-A1- 2011 177 592
- US-A1- 2011 306 053
- US-A1- 2012 269 702
- US-B1- 6 805 840

## Description

### Domaine technique

La présente invention concerne un module d'attraction magnétique. Elle concerne aussi un robot comprenant un tel module , et un procédé d'utilisation d'un tel module ou d'un tel robot.

L'invention permet à un utilisateur de faire de la purification d'une molécule d'intérêt (protéine, molécule attachée à une cellule, etc..) sur billes magnétiques. Le domaine de l'invention est plus particulièrement mais de manière non limitative celui de la purification de molécules d'ADN sur billes magnétiques.

### Etat de la technique antérieure

Actuellement dans les laboratoires de recherche et de diagnostic, la technique d'amplification de l'ADN appelée PCR est en constante progression et les préparations des plaques échantillons en amont et aval de cette amplification restent encore très souvent réalisées à la main par le manipulateur.

En aval de la PCR, une phase de purification de l'ADN peut être utilisée afin d'améliorer les résultats obtenus. Plusieurs techniques existent dont la plus récente : la purification sur billes magnétiques. US2005/0047963, US2012/0269702, US2011/0306053, US2007/0214900, US5443791 et US6124139 montrent des modules d'attraction magnétiques de l'art antérieur. Cette technologie est en constante évolution et les performances actuelles en font une technique de plus en plus utilisée pour sa fiabilité et sa facilité à être automatiser.

Cependant, à l'heure actuelle, les automates capables de réaliser de tels protocoles sont très onéreux (coût typique supérieur à 35 ou 40 k€) car ils demandent à utiliser des outils de manipulation complexes et coûteux (typiquement pipette + pince robotisée pour la manipulation de plaque PCR) et ne s'adressent donc encore qu'aux laboratoires fortunés qui ont un débit allant de moyen à élevé (20 à 100 plaques PCR par jour).

De plus, la phase de purification de l'ADN est une étape extrêmement compliquée à réaliser à la main et très consommatrice en temps de part, les longues et délicates manipulations de liquides ainsi que les périodes d'incubation de durées non négligeables entre chacune des étapes du protocole de purification.

Le but de l'invention est de proposer un module d'attraction magnétique permettant d'être utilisé pour de la purification sur billes magnétiques, avec au moins un des avantages suivants :
- Simplicité de réalisation et faible coût de production,
- Fiabilité de la manipulation et de la purification.

### Exposé de l'invention

Cet objectif est atteint avec un module d'attraction magnétique, comprenant :
- au moins un aimant permanent,
- pour chaque aimant permanent, une cavité associée à cet aimant et située à l'intérieur d'un pion comprenant deux extrémités dont une première extrémité comprend un trou d'entrée dans la cavité et une deuxième extrémité comprend une tête de cavité, ces deux extrémités étant reliées par une paroi latérale,
- des moyens pour déplacer chaque aimant considéré selon un axe de déplacement parallèle à une direction de déplacement entre deux positions dont une position d'interaction pour laquelle une partie de cet aimant considéré se loge à l'intérieur de sa cavité associée via le trou d'entrée de cette cavité et en étant en contact de la tête de cette cavité, et une position de retrait pour laquelle cet aimant considéré est extrait de sa cavité associée via le trou d'entrée par rapport à sa position d'interaction.
La tête de chaque cavité est en matériau ferromagnétique.

La paroi latérale de chaque cavité est de préférence en matériau paramagnétique.

Le module selon l'invention peut comprendre en outre une plaque de séparation percée pour chaque aimant, de sorte que chaque aimant dans sa position de retrait soit intégralement de l'autre côté de la plaque de séparation par rapport aux cavités. La plaque de séparation est de préférence située dans un plan perpendiculaire à la direction de déplacement. La plaque de séparation est de préférence en matériau ferromagnétique.

Chaque aimant peut posséder un jeu de déplacement selon la direction de déplacement qui lui est propre et qui est indépendant des autres aimants.

Le module selon l'invention peut comprendre en outre des ressorts de rappel agencés pour ramener les aimants dans leur position de retrait.

Un axe reliant le pôle sud au pôle nord de chaque aimant est de préférence parallèle à la direction de déplacement.

Chaque cavité s'étend de préférence de sa tête vers son trou d'entrée selon la direction de déplacement.

La paroi latérale de chaque cavité considérée peut posséder, du côté de la tête de cette cavité considérée, une forme biseautée élargissant l'épaisseur de la paroi latérale lorsque l'on s'éloigne de cette tête le long de la direction de déplacement.

Le module selon l'invention peut comprendre une plaque à tubes comprenant une matrice de tubes, chaque tube comprenant une extrémité supérieure ouverte et une pointe inférieure fermée, de sorte que les cavités soient comprises entre les aimants dans leur position de retrait et la plaque à tubes, et de sorte que la pointe inférieure de chaque tube pointe en direction des cavités, la pointe de chaque tube étant en contact d'au moins une tête de cavité.

Chaque tête de cavité est de préférence en contact avec quatre tubes différents, de préférence seulement quatre.
Suivant encore un autre aspect de l'invention, il est proposé un procédé d'utilisation du module selon l'invention, dans lequel :
1) on place dans des tubes un mélange de billes ferromagnétiques et d'une solution comprenant des molécules d'intérêt alors que les aimants sont dans leur position de retrait, de sorte que les molécules d'intérêt adhèrent aux billes ferromagnétiques, puis
2) on aspire la solution hors des tubes alors que les aimants sont dans leur position d'interaction, puis
3) on réinjecte une solution de rinçage dans les tubes, puis optionnellement
4) on aspire la solution de rinçage hors des tubes alors que les aimants sont dans leur position d'interaction, et/ou puis
5) on réitère optionnellement les étapes 3) puis 4), et/ou puis
6) on réinjecte une solution d'élution dans les tubes et on positionne les aimants dans leur position de retrait pour diluer les billes ferromagnétiques dans la solution d'élution, la solution d'élution séparant les molécules d'intérêt et les billes ferromagnétiques, et/ou puis
7) on aspire hors des tubes la solution d'élution mélangée aux molécules d'intérêt alors que les aimants sont dans leur position d'interaction.

Suivant encore un autre aspect de l'invention, il est proposé un robot comprenant un module selon l'invention, comprenant en outre des moyens motorisés de pipetage agencés pour :
- déplacer plusieurs cônes de pipetage dans l'espace,
- aspirer et/ou rejeter du liquide par les cônes de pipetage.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 illustre différentes étapes d'un procédé selon l'invention mis en oeuvre dans un module selon l'invention, de préférence dans un robot 28 selon l'invention,
- la figure 2 est une vue de coupe de profil d'un premier mode de réalisation préférentiel de module selon l'invention, selon le plan de coupe A-A de la figure 6, et alors que les aimants sont dans leur position « de retrait »,
- la figure 3 est une vue de coupe de profil du premier mode de réalisation de module selon l'invention, selon le plan de coupe A-A de la figure 6, et alors que les aimants sont dans leur position « d'interaction »,
- la figure 4 est une vue de coupe de face du premier mode de réalisation de module selon l'invention, selon le plan de coupe B-B de la figure 6, et alors que les aimants sont dans leur position « de retrait »,
- la figure 5 est une vue de coupe de face du premier mode de réalisation de module selon l'invention, selon le plan de coupe B-B de la figure 6, et alors que les aimants sont dans leur position « d'interaction »,
- la figure 6 est une vue de dessus du premier mode de réalisation de module selon l'invention,
- la figure 7A est une vue de dessus du détail 19 de la figure 6,
- la figure 7B est une vue de profil du détail 38 de la figure 5,
- la figure 8 est une vue de profil du détail 20 de la figure 2,
- la figure 9 est une vue de profil du détail 21 de la figure 3, et
- la figure 10 est une vue en perspective d'un robot selon l'invention comprenant le module selon l'invention des figures 2 à 9.

Ces modes de réalisation étant nullement limitatifs, on pourra notamment considérer des variantes de l'invention ne comprenant qu'une sélection de caractéristiques décrites par la suite isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si cette partie uniquement est suffisante pour conférer un avantage technique ou à différencier l'invention par rapport à l'état de la technique antérieure.

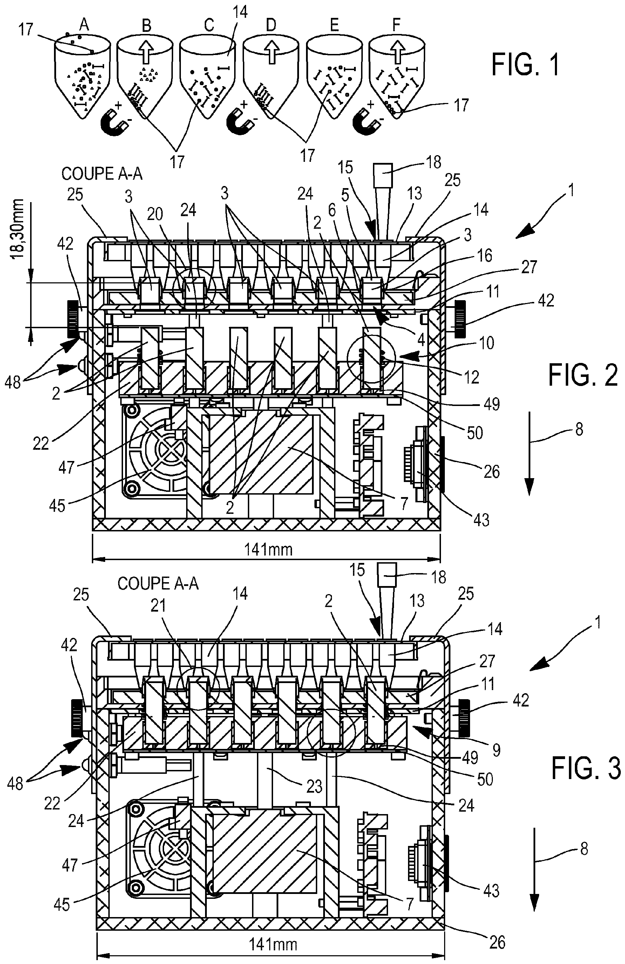

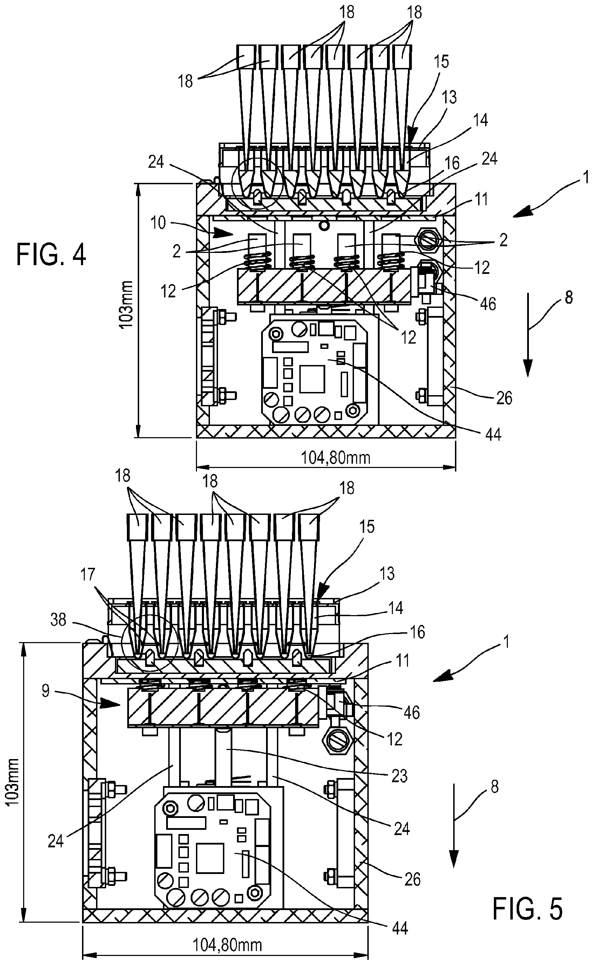

On va tout d'abord décrire, en référence aux figures 2 à 9, un premier mode de réalisation préférentiel de module 1 selon l'invention.

Le module 1 d'attraction magnétique selon l'invention comprend au moins un aimant 2 permanent, de préférence plusieurs aimants permanents 2. Chaque aimant 2 a typiquement une forme cylindrique.

Chaque aimant 2 permanent est un aimant néodyme (i.e. comprenant du néodyme, par exemple un aimant comprenant un coeur en néodyme entouré d'une couche protectrice typiquement argentée).

Les aimants 2 sont tous fixés à un même support 22. Les aimants 2 sont de préférence répartis sur le support 22 selon une matrice régulière de lignes et de colonnes d'aimants 2. Sur les figures, on voit que le module 1 comprend par exemple vingt-quatre aimants 2 sur quatre lignes et six colonnes.

Pour chaque aimant permanent 2, le module 1 comprend en outre une cavité 3 creuse associée à cet aimant 2. Chaque cavité 3 est de forme complémentaire à celle de son aimant 2 associé, i.e. même géométrie (typiquement cylindrique) et de préférence sensiblement de même volume.

Chaque cavité 3 est située à l'intérieur d'un pion 3, 4, 5, 6 qui, outre la cavité 3 qu'il accueille, comprend deux extrémités dont une première extrémité ouverte comprend un trou d'entrée 4 dans la cavité et une deuxième extrémité fermée comprend une tête 5 de cavité. Chaque pion comprend en outre une paroi latérale 6 qui relient ces deux extrémités (i.e. la tête 5 et le trou 4).

Le module 1 comprend en outre des moyens 7 pour déplacer chaque aimant 2 considéré selon un axe de déplacement parallèle à une direction 8 de déplacement (ici la direction verticale) entre deux positions dont :
- une position 9 d'interaction pour laquelle une partie de cet aimant 2 considéré se loge à l'intérieur de sa cavité 3 associée via le trou d'entrée 4 de cette cavité et en étant en contact de la tête 5 de cette cavité (cf figures 3, 5 et 9), et
- une position 10 de retrait pour laquelle cet aimant 2 considéré est extrait de sa cavité 3 associée via le trou d'entrée 4 par rapport à sa position d'interaction (cf figures 2, 4 et 8).

L'activation et la désactivation de l'aimantation des têtes 5 ferromagnétiques se jouent sur la distance entre chaque tête 5 de cavité 3 et l'aimant permanent 2 associé à cette cavité 3.

Les moyens de déplacement 7 sont agencés pour déplacer tous les aimants 2 en même temps.

En pratique, les moyens de déplacement 7 sont agencés pour déplacer, selon un axe de déplacement parallèle à la direction 8 de déplacement, tout le support 22.

Les moyens de déplacement 7 sont motorisés.

Les moyens de déplacement 7 comprennent un actuateur linéaire comprenant :
- un axe d'actuateur 23 mobile en contact du support 22, et
- deux axes 24 de guidage immobiles traversant le support 22.

Le principe de magnétisation du module 1 est basé sur l'aimantation par influence.

La tête 5 de chaque cavité 3 (i.e. de chaque pion 3, 4, 5, 6 comprenant cette cavité 3) est en matériau ferromagnétique, typiquement en acier qui possède un faible champ coercitif.

Le but est d'utiliser le champ magnétique généré par un aimant permanent 2 pour aimanter une tête 5 de cavité ferromagnétique à faible champ coercitif.

La paroi latérale 6 de chaque cavité 3 (i.e. de chaque pion 3, 4, 5, 6 comprenant cette cavité 3) est en matériau paramagnétique, typiquement en aluminium. Cette paroi latérale 6 paramagnétique permet de concentrer le champ magnétique de manière très locale sur la tête 5.

Le module 1 comprend en outre une plaque de séparation 11 percée d'un trou pour chaque aimant 2, de sorte que :
- chaque aimant 2 dans sa position de retrait 10 (cf figures 2, 4 et 8) soit intégralement de l'autre côté de la plaque de séparation 11 par rapport aux cavités 3 (i.e. chaque aimant 2 dans sa position de retrait 10 est situé intégralement d'un côté de la plaque de séparation 11 et les cavités 3 sont situés de l'autre côté de la plaque de séparation 11), et
- chaque aimant 2 dans sa position d'interaction ai une partie qui soit en contact d'une tête 5 et du même côté de la plaque de séparation 11 que les cavités 3.

Chaque aimant, pour passer de sa position de retrait vers sa position d'interaction et inversement doit passer à travers la plaque 11 par un trou de cette plaque 11.

Les trous d'entrée 4 de toutes les cavités 3 se prolongent à travers la plaque de séparation 11 qui est solidaire de toutes les cavités 3 (i.e. de tous les pions).

La plaque de séparation 11 est située dans un plan perpendiculaire à la direction de déplacement 8.

La plaque de séparation 11 est en matériau ferromagnétique, typiquement en acier.

Ainsi, afin d'améliorer l'efficacité de démagnétisation et de minimiser la hauteur du module 1, la plaque 11 servant d'écran magnétique absorbe une grande partie du champ des aimants permanents 2 lorsque ces derniers sont positionnés en dessous de cet écran 11 dans leur position de retrait.

Chaque aimant 2 possède un jeu de déplacement 49 (typiquement de 0,5 à 3 mm, de préférence d'environ 1 mm) selon la direction de déplacement 8 qui lui est propre et qui est indépendant des autres aimants 2. Ce jeu de déplacement 49 est limité par une butée 50 en arrière des aimants 2, c'est-à-dire du côté opposé des aimants 2 par rapport aux cavités 3. Lors du passage des aimants 2 de leur position de retrait vers leur position d'interaction, l'actuateur 7 monte la plaque support 22 jusqu'à ce que les aimants permanents 2 viennent en contact des têtes ferromagnétiques 5. Lors du positionnement des aimants 2 dans les pions, les tolérances d'usinage peuvent interférer sur le bon contact de certains des aimants 2. Afin de palier à ces défauts, les aimants 2 sont donc montés sur un guidage ayant une tolérance 49 de positionnement verticale typiquement de un millimètre. Ainsi la force d'attraction entre les têtes ferromagnétiques 5 et les aimants 2 assure un contact ferme et sûr.

Chaque pion étant composé d'une tête 5 en matériau ferromagnétique doux et d'un corps (paroi latérale) 6 paramagnétique, seule cette tête 5 est alors aimantée par l'influence de son aimant 2 en position d'interaction. De cette aimantation résulte la propagation, autour de la tête, du champ magnétique généré par l'aimant.

Le module 1 comprend en outre des ressorts de rappel 12 agencés pour ramener les aimants 2 (pousser ou tirer) dans leur position de retrait 10 et ainsi faciliter leur décrochage des têtes 5. Chaque ressort 12 est un ressort dont les spires forment une forme cylindrique (ou conique) qui entoure un aimant 2 (typiquement cet aimant 2 est centré à l'intérieur de ce cylindre ou de ce cône sur l'axe de symétrie de révolution de ce cylindre ou de ce cône). Les ressorts 12 permettent de décrocher les aimants 2 des têtes 5 pour ramener les aimants 2 dans leur position de retrait, en particulier dans le cas où les moyens de déplacement 7 n'ont pas assez de couple moteur pour le faire à eux seuls (ce qui est probable si l'on veut un champ magnétique fort, donc une utilisation probable de néodyme pour les aimants 2, que ces aimants 2 sont nombreux, mais que l'on souhaite un petit moteur 7 pour la compacité du module 1). Dans le cas des figures 2, 3, 4 et 5, les ressorts 12 sont des ressorts de compression agencés pour pousser les aimants 2 de leur position d'interaction vers leur position de retrait.

Un axe reliant le pôle sud au pôle nord de chaque aimant 2 est parallèle à la direction 8 de déplacement. Autrement dit, chaque aimant est orienté nord/sud ou sud/nord selon la direction 8.

Chaque cavité 3 s'étend de sa tête 5 vers son trou d'entrée 4 selon la direction 8 de déplacement.

La paroi latérale 6 de chaque cavité 3 considérée possède, du côté de la tête 5 de cette cavité considérée, une forme biseautée élargissant l'épaisseur de la paroi latérale 6 lorsque l'on s'éloigne de cette tête 5 le long de la direction 8 de déplacement. Cette épaisseur est définie perpendiculairement à la direction 8 dans le plan des figures 2, 3, 8 et 9.

Ainsi, la paroi latérale 6 de chaque cavité 3 est dessinée de manière à contrôler l'intensité du champ magnétique sur la surface d'un tube 14 en faisant augmenter la distance entre l'axe central de la cavité 3 (parallèle à la direction 8) et ce tube 14 au fur et à mesure que l'on s'éloigne de la tête 5 de cette cavité 3 et donc être en capacité de créer un agglomérat de billes 17 sur une faible surface verticale du tube 14 uniquement à proximité de la tête 5 de cette cavité.

Le module 1 en outre comprend une plaque à tubes 13 (telle qu'une « plaque PCR ») comprenant une matrice de tubes 14 (ou une matrice de logements, chaque logement étant agencé pour y accueillir un tube 14).

Chaque tube 14 (typiquement de la forme d'un tube eppendorf) comprend une extrémité supérieure 15 ouverte et une pointe inférieure 16 fermée.

Les cavités 3 sont comprises entre les aimants 2 dans leur position de retrait 10 et la plaque 13 à tubes.

La pointe inférieure 16 de chaque tube pointe en direction des cavités 3.

La pointe 16 de chaque tube 14 est en contact d'au moins une tête 5 de cavité, de préférence d'une seule tête 5.

Le module 1 comprend des moyens 25 pour maintenir la plaque 13 à tubes immobile par rapport aux cavités 3, telle au moins une (de préférence au moins deux) bride 25 de maintien.

Chaque bride 25 est maintenue au module 1 par un bouton de serrage 42 qui peut être dévissé pour enlever la bride 25 pour changer de plaque 13 à tubes.

La bride 25 permet d'aplanir la plaque 13 qui peut avoir subit des déformations après son passage dans un thermocycleur. Ce dernier portant la température des échantillons à plus de 90°C, certaines plaques 13 de PCR (plastique souple) se déforment rapidement lors de leur retour à température ambiante. Le pipetage est alors facilité par une meilleure reproductibilité du placement des tubes 14 (aussi appelés « puits »).

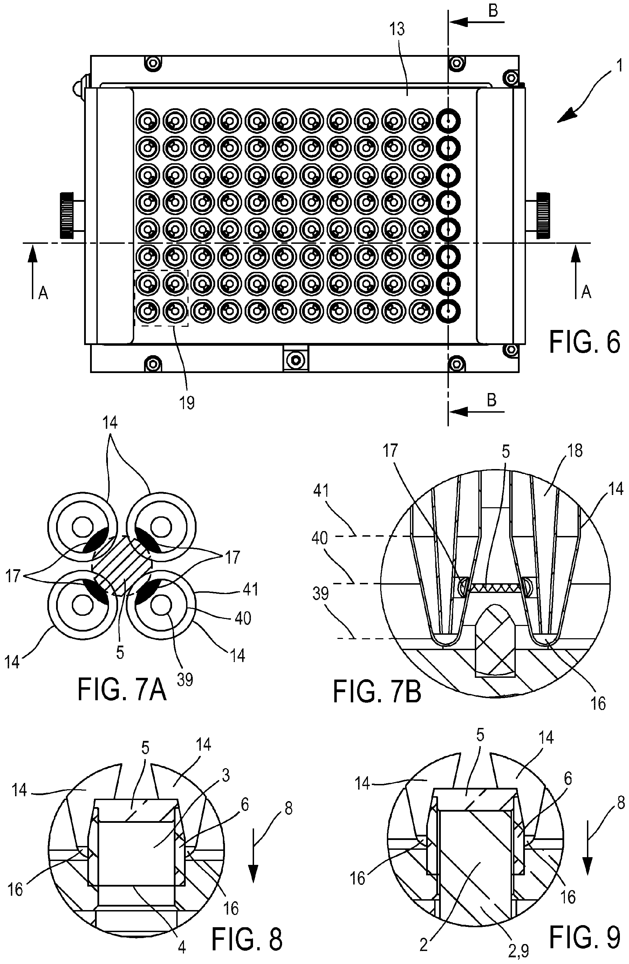

Comme illustré sur la figure 6 ou 7A, on voit que chaque tête 5 de cavité 3 est en contact avec quatre (et de préférence seulement quatre) tubes 14 différents.

En nombre total, on remarque que le module 1 comprend une cavité 3 pour quatre tubes 14 ou logements de tube.

Les tubes 14 ou logements de tube sont de préférence répartis sur la plaque 13 selon une matrice régulière de lignes et de colonnes. Sur les figures, on voit que la plaque 13 comprend par exemple quatre vint seize tubes 14 ou logement de tubes sur huit lignes et douze colonnes.

Afin de concentrer le champ électromagnétique des aimants 2 en position d'interaction sur une faible surface de la paroi d'un tube 14 tout en étant le plus éloigné du fond de ce tube 14, chaque pion 3, 4, 5, 6 est conçu avec une géométrie particulière. La tête ferromagnétique 5 est usinée de manière à épouser la paroi du tube 14 pour obtenir un contact direct sur une faible surface verticale. Ce tube 14 ayant une forme en V, la distance entre sa paroi et le coeur du pion croit avec sa profondeur. La décroissance du champ magnétique variant en 1/r³ (r=distance entre billes 17 et origine du champ), cette propriété permet d'obtenir, verticalement, un gradient de l'amplitude du champ magnétique avec un maximum au niveau du contact entre la tête ferromagnétique 5 et la paroi du tube 14. Les billes 17 sont alors progressivement attirées vers la tête 5 du pion.

Cet attraction des billes 17 très localisée verticalement dans chaque tube 14 lorsque les aimants 2 sont dans leur position d'interaction est illustrée sur les figures 7A et 7B. Sur la vue de profil 7B on distingue une tête 5 en interaction avec deux tubes 14. Sur la vue de dessus 7A on distingue cette même tête 5 en interaction avec quatre tubes 14. Sur ces figures 7A et 7B, on distingue trois niveaux verticaux différents 39, 40, 41 de coupe des tubes 14.

Pour passer de la position d'interaction vers la position de retrait de chaque aimant 2, l'actuateur linéaire 7 descend la plaque support 22 des aimants 2 afin d'éloigner les aimants 2 au plus des têtes ferromagnétiques 5. La cavité 3 de chaque pion 3, 4, 5, 6 est alors vide et la tête ferromagnétique 5 n'étant plus en contact avec l'aimant 2, le champ autour des tubes 14 n'est plus présent et les billes magnétiques 17 à l'intérieur du tube 14 sont donc relâchées en solution.

Une fois en position de retrait des aimants 2, un champ magnétique résiduel reste toutefois présent au niveau des tubes 14. Afin de diminuer significativement ce résidu, la plaque de séparation 11 jouant rôle d'écran magnétique est positionnée dans le bloc 26 (typiquement en aluminium), sous la plaque 27 supportant les pions. Cet écran ferromagnétique 11 permet ainsi de dévier le flux magnétique généré par les aimants 2 et diminuer les résidus au niveau des puits 14.

On remarque que selon l'invention, du point de vue d'un observateur immobile par rapport au châssis ou boitier extérieur 26 du module 1, la plaque 13 à tubes est immobile par rapport au châssis ou boitier extérieur 26 du module 1 mais c'est les aimants 2 qui sont mobiles par rapport au châssis ou boitier extérieur 26 du module 1.

Par rapport à de l'état de l'art nécessitant une pince robotisée pour approcher ou éloigner des éléments émettant un champ magnétique une plaque PCR, cela permet :
- un coût de production moindre,
- une programmation informatique plus simple si le module 1 est commandé dans un robot automate,
- une meilleure reproductibilité du placement des tubes 14, et donc une meilleure fiabilité,
- une plus grande rapidité (monté/descente des aimants 2 plus rapide que le déplacement d'une plaque PCR par une pince robotisée) .

Les aimants permanents 2, par rapport à de l'état de l'art nécessitant des électro-aimants pour émettre un champ magnétique, permettent :
- un coût de production moindre,
- une meilleure compacité,
- une plus grande facilité de mise en oeuvre,
- une plus faible consommation d'énergie,
- une meilleure performance.

Le module 1 comprend en outre :
- Un connecteur 43 (connecteur SUB-D COM SMCI12), agencé pour être connecté à un ordinateur.
- Une carte de commande 44 (Carte SMCI12 Nanotec), connecté au connecteur 43. Cette carte 44 a pour fonction le contrôle de la puissance des moyens de déplacement motorisés 7. Cette carte 44 peut être connectée à un ordinateur via le connecteur 43 pour être programmée. Une fois la carte 44 programmée, le module 1 n'a plus besoin d'être connecté à un ordinateur, et la carte 44 peut commander seule les moyens de déplacement 7 (typiquement au sein d'un robot 28 décrit par la suite)
- Un filtre d'aération 45,
- Un « capteur ON » 46, agencé pour détecter lorsque les aimants 2 sont dans leur position d'interaction (concrètement, le capteur ON détecte la position correspondante de la plaque de support 22 des aimants 2),
- Un « capteur OFF » 47, agencé pour détecter lorsque les aimants 2 sont dans leur position de retrait (concrètement, le capteur OFF détecte la position correspondante de la plaque de support 22 des aimants 2), et
- Des diodes lumineuses 48 (ou DELs), dont une diode qui est agencée vis-à-vis du capteur ON pour être allumée avec une certaine couleur (typiquement orange) uniquement lorsque les aimants 2 sont dans leur position d'interaction, et une autre diode qui est agencée vis-à-vis du capteur OFF pour être allumée avec une autre couleur (typiquement vert) uniquement lorsque les aimants 2 sont dans leur position de retrait.

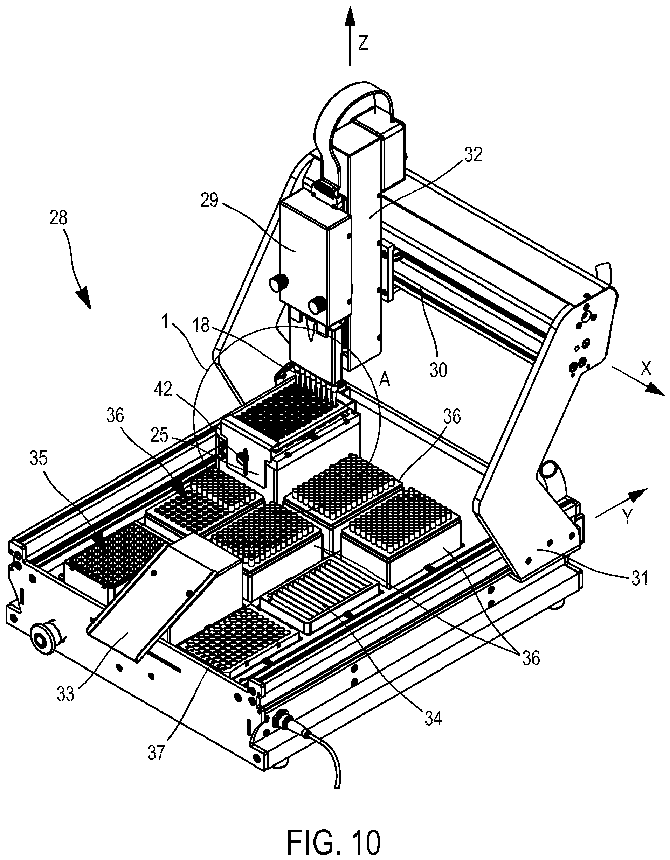

On va maintenant décrire, en référence à la figure 10, un robot 28 comprenant un module 1 selon l'invention des figures 2 à 9.

Comme illustré sur la figure 10, le robot 28 comprend :
- le module 1 d'attraction magnétique,
- des moyens 29 à 32 de pipetage motorisés agencés pour :
   ∘ déplacer dans l'espace plusieurs cônes 18 de pipetage portés par une pipette 29; on remarque que ces cônes 18, appartenant au robot 28, sont aussi représentés sur les figures 2, 3, 4 et 5. Trois axes motorisés 30, 31 et 32 permettent de déplacer les cônes 18 le long de trois coordonnées X, Y et Z formant un repère orthogonal.
   ∘ aspirer et/ou rejeter du liquide par les cônes 18 de pipetage. Pour cela, une pompe de la pipette 29 comprend plusieurs voies de pipetage, chaque voie pouvant accueillir un cône 18. De manière préférentielle, la pipette 29 comprend une ligne ou une matrice à deux dimensions de voies de pipetage (une ligne de huit voies de pipetage dans le cas des figures).

La contenance de chaque cône 18 est typiquement de 10 microlitres, 50 microlitres, 200 microlitres, 1000 microlitres, etc... différents types de cône 18 s'adaptant sur la pipette 29.

Le robot 28 peut comprendre en outre de manière optionnelle :
- une poubelle 33 « infinie » (toboggan) pour recevoir des cônes 18 usagés jetés ou expulsés par la pipette 29,
- un réservoir ou plusieurs réservoirs 34 de solutions, pour être aspirées par la pipette 29,
- une poubelle de liquides 35, pour recevoir des liquides rejetés par la pipette 29,
- une réserve 36 (rack) de cônes 18 non montés sur la pipette 29, pour être montés sur la pipette après que celle-ci ai expulsé des cônes 18 usagés,
- une réserve 37 de plaques PCR pour le module 1.

On va maintenant décrire, en référence à la figure 1, un procédé mis en oeuvre dans le module 1 selon l'invention des figures 2 à 9, plus exactement par le robot 28 comprenant le module 1.

Dans ce procédé selon l'invention :
1) on place dans des tubes 14 d'une plaque 13 du module 1 un mélange de billes ferromagnétiques 17 et d'une solution comprenant des molécules d'intérêt (petits bâtonnets sur la figure 1) alors que les aimants 2 sont dans leur position de retrait, de sorte que les molécules d'intérêt adhèrent aux billes ferromagnétiques 17 (Figure 1A : ajouter 1.8 Volumes de CleanPCR dans la réaction de PCR pour lier l'ADN aux billes 17 (kit Agencourt AMPur XP de chez Beckman Coulter), et mélanger par aspiration refoulement de la pipette 29 et changer de cônes 18 de la pipette 29 entre chaque ligne de tubes 14), puis
2) on aspire (par la pipette 29 du robot 28) la solution hors des tubes 14 alors que les aimants 2 sont dans leur position d'interaction. Une aspiration contrôlée par la pipette 29 permet, dès lors, de garder intact chaque amas de bille 17 durant tout le procédé d'aspiration et de ne récupérer que les contaminants. (Figure 1B : Magnétiser les billes 17 avec les aimants 2 dans leur position d'interaction pour séparer l'ADN des autres éléments. Attendre que l'attraction des billes 17 soit optimale et complète. Aspirer la solution et la jeter. Changer de cônes 18 de la pipette 29 entre chaque ligne de tubes 14), puis
3) on réinjecte une solution de rinçage dans les tubes 14 (de manière optionnelle alors que les aimants 2 sont dans leur position de retrait pour diluer les billes ferromagnétiques dans la solution de rinçage) (Figure 1C : Démagnétiser les billes 17 et ajouter de l'éthanol à 70% pour laver les billes. Mélanger par aspiration refoulement de la pipette 29. Changer de cônes 18 de la pipette 29 entre chaque ligne de tubes 14), puis
4) on aspire la solution de rinçage hors des tubes 14 alors que les aimants 2 sont dans leur position d'interaction (Figure 1D : Magnétiser les billes avec les aimants 2 dans leur position d'interaction pour séparer l'ADN des autres éléments. Attendre que l'attraction des billes soit optimale et complète. Aspirer la solution et la jeter. Changer de cônes 18 de la pipette 29 entre chaque ligne de tubes 14), puis
5) on réitère optionnellement les étapes 3) puis 4) (lavages complémentaires), puis
6) on réinjecte une solution d'élution dans les tubes 14 et on positionne les aimants 2 dans leur position de retrait pour diluer les billes ferromagnétiques dans la solution d'élution, la solution d'élution séparant les molécules d'intérêt et les billes ferromagnétiques (Figure 1E : Démagnétiser les billes et ajouter le buffer d'élution (TE(Tris+EDTA), ou acide éthylène diamine tétraacétique ou Eau ultra pure avec du Tris-Acetate ph8.0 tel que recommandé sur la notice du kit Agencourt AMPur XP de chez Beckman Coulter) pour casser la liaison entre les billes et l'ADN. Mélanger par aspiration refoulement de la pipette 29. Changer de cônes 18 de la pipette 29 entre chaque ligne de tubes 14), puis
7) on aspire hors des tubes 14 la solution d'élution mélangée aux molécules d'intérêt alors que les aimants 2 sont dans leur position d'interaction (Figure 1F : Magnétiser les billes 17 avec les aimants 2 dans leur position d'interaction. Transférer l'échantillon en suspension dans un puits final prêt pour l'analyse.).

Bien sûr, l'invention n'est pas limitée aux exemples qui viennent d'être décrits et de nombreux aménagements peuvent être apportés à ces exemples sans sortir du cadre de l'invention.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres.

## Revendications

1. Module (1) d'attraction magnétique, comprenant :
- au moins un aimant (2) permanent,
- pour chaque aimant permanent (2), une cavité (3) associée à cet aimant (2) et située à l'intérieur d'un pion comprenant deux extrémités dont une première extrémité comprend un trou d'entrée (4) dans la cavité et une deuxième extrémité comprend une tête (5) de cavité, ces deux extrémités étant reliées par une paroi latérale (6),
- des moyens (7) pour déplacer chaque aimant (2) considéré selon un axe de déplacement parallèle à une direction (8) de déplacement entre deux positions dont une position (9) d'interaction pour laquelle une partie de cet aimant considéré se loge à l'intérieur de sa cavité associée via le trou d'entrée de cette cavité et en étant en contact de la tête de cette cavité, et une position (10) de retrait pour laquelle cet aimant considéré est extrait de sa cavité associée via le trou d'entrée par rapport à sa position d'interaction,
**caractérisé en ce que** la tête (5) de chaque cavité est en matériau ferromagnétique.

2. Module selon la revendication 1, **caractérisé en ce que** la paroi latérale (6) de chaque cavité est en matériau paramagnétique.

3. Module selon l'une quelconque des revendications précédentes, **caractérisé en ce qu'**il comprend en outre une plaque de séparation (11) percée pour chaque aimant, de sorte que chaque aimant dans sa position de retrait (10) soit intégralement de l'autre côté de la plaque de séparation (11) par rapport aux cavités (3).

4. Module selon la revendication 3, **caractérisé en ce que** la plaque de séparation (11) est située dans un plan perpendiculaire à la direction de déplacement (8).

5. Module selon la revendication 3 ou 4, **caractérisé en ce que** la plaque de séparation (11) est en matériau ferromagnétique.

6. Module selon l'une quelconque des revendications précédentes, **caractérisé en ce que** chaque aimant possède un jeu de déplacement (49) selon la direction de déplacement (8) qui lui est propre et qui est indépendant de chaque autre aimant.

7. Module selon la revendication 6, **caractérisé en ce que** le jeu de déplacement (49) est limité par une butée (50) en arrière de chaque aimant (2) c'est-à-dire du côté opposé de chaque aimant (2) par rapport à chaque cavité (3).

8. Module selon l'une quelconque des revendications précédentes, **caractérisé en ce qu'**il comprend en outre des ressorts de rappel (12) agencés pour ramener les aimants (2) dans leur position de retrait (10).

9. Module selon l'une quelconque des revendications précédentes, **caractérisé en ce qu'**un axe reliant le pôle sud au pôle nord de chaque aimant (2) est parallèle à la direction (8) de déplacement.

10. Module selon l'une quelconque des revendications précédentes, **caractérisé en ce que** chaque cavité (3) s'étend de sa tête (5) vers son trou d'entrée (4) selon la direction (8) de déplacement.

11. Module selon l'une quelconque des revendications précédentes, **caractérisé en ce que** la paroi latérale (6) de chaque cavité (3) considérée possède, du côté de la tête (5) de cette cavité considérée, une forme biseautée élargissant l'épaisseur de la paroi latérale (6) lorsque l'on s'éloigne de cette tête (5) le long de la direction (8) de déplacement.

12. Module selon l'une quelconque des revendications précédentes, **caractérisé en ce qu'**il comprend une plaque à tubes (13) comprenant une matrice de tubes (14), chaque tube comprenant une extrémité supérieure (15) ouverte et une pointe inférieure (16) fermée, de sorte que les cavités soient comprises entre les aimants (2) dans leur position de retrait (10) et la plaque (13) à tubes, et de sorte que la pointe inférieure (16) de chaque tube pointe en direction des cavités (3), la pointe (16) de chaque tube (14) étant en contact d'au moins une tête (5) de cavité.

13. Module selon la revendication 12, **caractérisé en ce que** chaque tête (5) de cavité est en contact avec quatre tubes (14) différents.

14. Procédé d'utilisation du module selon l'une quelconque des revendications 12 ou 13, dans lequel :
- on place dans des tubes (14) un mélange de billes ferromagnétiques (17) et d'une solution comprenant des molécules d'intérêt alors que les aimants (2) sont dans leur position de retrait, de sorte que les molécules d'intérêt adhèrent aux billes ferromagnétiques, puis
- on aspire la solution hors des tubes alors que les aimants (2) sont dans leur position d'interaction, puis
- on réinjecte une solution de rinçage dans les tubes.

15. Robot comprenant un module selon l'une quelconque des revendications 1 à 13, comprenant en outre des moyens motorisés de pipetage agencés pour :
- déplacer plusieurs cônes (18) de pipetage dans l'espace,
- aspirer et/ou rejeter du liquide par les cônes de pipetage.

## Patentansprüche

1. Magnetanziehungsmodul (1), enthaltend:
- zumindest einen Dauermagneten (2),
- für jeden Dauermagneten (2) einen diesem Magneten (2) zugeordneten Hohlraum (3), der sich innerhalb eines Zapfens mit zwei Enden befindet, von denen ein Ende ein Einlassloch (4) in den Hohlraum und ein zweites Ende einen Hohlraumkopf (5) aufweist, wobei diese beiden Enden über eine Seitenwand (6) miteinander verbunden sind,
- Einrichtungen (7) zum Verlagern eines jeden betreffenden Magneten (2) entlang einer Verlagerungsachse, die parallel zu einer Verlagerungsrichtung (8) zwischen zwei Positionen verläuft, darunter eine Interaktionsposition (9), bei der ein Teil dieses betreffenden Magneten innerhalb seines zugeordneten Hohlraums durch das Einlassloch dieses Hohlraums aufgenommen ist und mit dem Kopf dieses Hohlraums in Kontakt steht, und eine Rückzugsposition (10), bei der dieser betreffende Magnet aus seinem zugeordneten Hohlraum über das Einlassloch bezüglich seiner Interaktionsposition herausgezogen ist,
**dadurch gekennzeichnet, dass** der Kopf (5) eines jeden Hohlraums aus ferromagnetischem Material besteht.

2. Modul nach Anspruch 1, **dadurch gekennzeichnet, dass** die Seitenwand (6) eines jeden Hohlraums aus paramagnetischem Material besteht.

3. Modul nach einem der vorangehenden Ansprüche, **dadurch gekennzeichnet, dass** es ferner eine für jeden Magneten durchbohrte Trennplatte (11) enthält, so dass jeder Magnet in seiner Rückzugsposition (10) bezüglich der Hohlräume (3) vollständig auf der anderen Seite der Trennplatte (11) liegt.

4. Modul nach Anspruch 3, **dadurch gekennzeichnet, dass** die Trennplatte (11) in einer Ebene senkrecht zur Verlagerungsrichtung (8) liegt.

5. Modul nach Anspruch 3 oder 4, **dadurch gekennzeichnet, dass** die Trennplatte (11) aus ferromagnetischem Material besteht.

6. Modul nach einem der vorangehenden Ansprüche, **dadurch gekennzeichnet, dass** jeder Magnet ein Verlagerungsspiel (49) in Verlagerungsrichtung (8) aufweist, das diesem eigen und von jedem weiteren Magneten unabhängig ist.

7. Modul nach Anspruch 6, **dadurch gekennzeichnet, dass** das Verlagerungsspiel (49) von einem Anschlag (50) hinter jedem Magneten (2) begrenzt wird, das heißt auf der bezüglich eines jeden Hohlraums (3) entgegengesetzten Seite eines jeden Magneten (2).

8. Modul nach einem der vorangehenden Ansprüche, **dadurch gekennzeichnet, dass** es ferner Rückstellfedern (12) enthält, die dazu vorgesehen sind, die Magnete (2) in ihre Rückzugsstellung (10) zurückzuführen.

9. Modul nach einem der vorangehenden Ansprüche, **dadurch gekennzeichnet, dass** eine den Südpol mit dem Nordpol eines jeden Magneten (2) verbindende Achse parallel zur Verlagerungsrichtung (8) verläuft.

10. Modul nach einem der vorangehenden Ansprüche, **dadurch gekennzeichnet, dass** jeder Hohlraum (3) sich von seinem Kopf (5) zu seinem Einlassloch (4) in Verlagerungsrichtung (8) erstreckt.

11. Modul nach einem der vorangehenden Ansprüche, **dadurch gekennzeichnet, dass** die Seitenwand (6) eines jeden betreffenden Hohlraums (3) auf der Seite des Kopfes (5) dieses betreffenden Hohlraums eine abgeschrägte Form aufweist, welche mit zunehmender Entfernung in Verlagerungsrichtung (8) von diesem Kopf (5) weg die Dicke der Seitenwand (6) erweitert.

12. Modul nach einem der vorangehenden Ansprüche, **dadurch gekennzeichnet, dass** es eine Röhrenplatte (13) mit einer Röhrenmatrix (14) enthält, wobei jedes Rohr ein oberes, offenes Ende (15) und eine untere, geschlossene Spitze (16) aufweist, so dass die Hohlräume zwischen den Magneten (2) in ihrer Rückzugsposition (10) und der Röhrenplatte (13) ausgebildet sind und dass die untere Spitze (16) einer jeden Röhre in Richtung der Hohlräume (3) spitz zuläuft, wobei die Spitze (16) einer jeden Röhre (14) mit zumindest einem Hohlraumkopf (5) in Kontakt steht.

13. Modul nach Anspruch 12, **dadurch gekennzeichnet, dass** jeder Hohlraumkopf (5) mit vier verschiedenen Röhren (14) in Kontakt ist.

14. Verfahren zur Verwendung des Moduls nach einem der Ansprüche 12 oder 13, wobei
- in die Röhren (14) ein Gemisch aus ferromagnetischen Kugeln (17) und einer Lösung mit interessierenden Molekülen eingebracht wird, während die Magnete (2) in ihrer Rückzugsposition sind, so dass die interessierenden Moleküle an den ferromagentischen Kugeln anhaften, dann
- die Lösung aus den Röhren abgesaugt wird, während die Magnete (2) in ihrer Interaktionsposition sind, dann
- eine Spüllösung in die Röhren eingespritzt wird.

15. Roboter mit einem Modul nach einem der Ansprüche 1 bis 13, ferner enthaltend motorisierte Pipettiereinrichtungen, die dazu vorgesehen sind,
- mehrere Pipettierkegel (18) im Raum zu verlagern,
- über die Pipettierkegel Flüssigkeit abzusaugen und/oder auszustoßen.

## Claims

1. Magnetic attraction module (1), comprising:
- at least one permanent magnet (2),
- for each permanent magnet (2), a cavity (3) associated with this magnet (2) and located inside a pin comprising two ends, of which a first end comprises an entrance hole (4) into the cavity and a second end comprises a cavity head (5), these two ends being connected by a side wall (6),
- means (7) for moving each magnet (2) in question along a movement axis parallel to a movement direction (8) between two positions, including an interaction position (9) for which part of this magnet in question is accommodated inside its associated cavity via the entrance hole of this cavity and being in contact with the head of this cavity, and a retraction position (10) for which this magnet in question is extracted from its associated cavity via the entrance hole relative to its interaction position,
**characterized in that** the head (5) of each cavity is made of ferromagnetic material.

2. Module according to claim 1, **characterized in that** the side wall (6) of each cavity is made of paramagnetic material.

3. Module according to any one of the preceding claims, **characterized in that** it also comprises a pierced separator (11) for each magnet, such that each magnet, in its retraction position (10), is completely on the other side of the separator (11) relative to the cavities (3).

4. Module according to claim 3, **characterized in that** the separator (11) is located in a plane perpendicular to the movement direction (8).

5. Module according to claim 3 or 4, **characterized in that** the separator (11) is made of ferromagnetic material.

6. Module according to any one of the preceding claims, **characterized in that** each magnet has a movement clearance (49) in the movement direction (8) of its own which is independent of every other magnet.

7. Module according to claim 6, **characterized in that** the movement clearance (49) is limited by a stop (50) behind each magnet (2), i.e. on the opposite side of each magnet (2) relative to each cavity (3).

8. Module according to any one of the preceding claims, **characterized in that** it also comprises return springs (12) arranged to bring the magnets (2) back into their retraction position (10).

9. Module according to any one of the preceding claims, **characterized in that** an axis connecting the south pole to the north pole of each magnet (2) is parallel to the movement direction (8).

10. Module according to any one of the preceding claims, **characterized in that** each cavity (3) extends from its head (5) to its entrance hole (4) in the movement direction (8).

11. Module according to any one of the preceding claims, **characterized in that** the side wall (6) of each cavity (3) in question, from the side of the head (5) of this cavity in question, has a bevelled shape increasing the thickness of the side wall (6) when moving away from this head (5) in the movement direction (8).

12. Module according to any one of the preceding claims, **characterized in that** it comprises a tube plate (13) comprising an array of tubes (14), each tube comprising an open upper end (15) and a closed lower tip (16), such that the cavities are comprised between the magnets (2) in their retraction position (10) and the tube plate (13), and such that the lower tip (16) of each tube points in the direction of the cavities (3), the tip (16) of each tube (14) being in contact with at least one cavity head (5).

13. Module according to claim 12, **characterized in that** each cavity head (5) is in contact with four different tubes (14).

14. Method for using the module according to any one of claims 12 or 13, in which:
- a mixture of ferromagnetic beads (17) and a solution comprising molecules of interest is placed in tubes (14) while the magnets (2) are in their retraction position, such that the molecules of interest adhere to the ferromagnetic beads, then
- the solution is aspirated out of the tubes while the magnets (2) are in their interaction position, then
- a rinsing solution is injected into the tubes.

15. Robot comprising a module according to any one of claims 1 to 13, also comprising motorized pipetting means arranged:
- to move several pipette nose cones (18) in space,
- to aspirate and/or discharge liquid through the pipette nose cones.
